# FASCICULE DE BREVET EUROPEEN

(11) **EP 1 384 563 B1**
(45) Date de publication et mention de la délivrance du brevet: **19.04.2006**
(21) Numéro de dépôt: 03291597.7
(22) Date de dépôt: 27.06.2003
(51) Int. Cl.: B29C 49/02, B29C 51/34

(54) **Procédé de production d'un récipient creux décoré avec post-formage en moule**
Verfahren zur Herstellung eines hohlen dekorierten Behälters mit Nachverformung in einem Formwerkzeug
Method for manufacturing a hollow container with post forming in mould

(30) Priorité: 15.07.2002 FR 0208908
(43) Date de publication de la demande: 28.01.2004
(73) Titulaire: Autobar Packaging France, 40140 Soustons (FR)
(72) Inventeur: Marcel, Henri-Pierre, 40140 Souston (FR)
(74) Mandataire: Thinat, Michel

(56) Documents cités:
- EP-A- 1 153 728
- US-A- 4 040 233
- US-A- 5 756 038
- US-B1- 6 258 313
- PATENT ABSTRACTS OF JAPAN vol. 012, no. 134 (M-689), 23 avril 1988 (1988-04-23) -& JP 62 256630 A (TOYODA GOSEI CO LTD), 9 novembre 1987 (1987-11-09) -& DATABASE WPI Week 198750 Derwent Publications Ltd., London, GB; AN 1987-352528 XP002235904 & JP 62 256630 A

## Description

L'invention concerne en général les procédés de production de récipients creux décorés, tels que des pots de yaourts en matière plastique.

Plus précisément, l'invention concerne un procédé tel que défini dans le préambule de la revendication 1.

Des procédés de ce type sont connus de l'art antérieur, notamment par le document de brevet US5756038 et par le document FR2614576 qui révèle un procédé comprenant, outre les étapes ci-dessus, une étape de post-formage consistant à chauffer la préforme décorée sur un mandrin présentant la forme prédéterminée.

La préforme est produite par thermoformage d'une matière plastique. Une fois enfilée sur le mandrin et chauffée, elle se rétracte naturellement sous l'effet des tensions internes résultant de l'opération de thermoformage.

Ce procédé présente le défaut de n'être adapté qu'à une gamme limitée de formes prédéterminées. Il n'est par exemple pas possible de produire des récipients bombés vers l'extérieur, car ces récipients seraient impossibles à démouler du mandrin après post-formage.

Le document US 4040233 divulgue un autre procédé utilisant deux demi-coques en association avec un mandrin. Mais cet autre procédé s'avère complexe et donc coûteux à mettre en oeuvre.

Dans ce contexte, la présente invention a pour but de pallier le défaut mentionné ci-dessus.

Ce but est atteint grâce à un procédé ayant les caractéristiques de la partie caractérisante de la revendication 1.

L'invention présente également d'autres caractéristiques faisant l'objet des revendications dépendantes.

D'autres caractéristiques et avantages de l'invention ressortiront clairement de la description qui en est faite ci-dessous, à titre indicatif et nullement limitatif, en référence aux figures annexées, parmi lesquelles :
- la figure 1 représente une première phase de l'étape de post-formage, dans laquelle une préforme creuse est introduite dans le moule,
- la figure 2 représente une deuxième phase de l'étape de post-formage, dans laquelle les moyens d'étanchéité et l'élément chauffant sont mis en place sur le moule,
- la figure 3 représente une troisième phase de l'étape de post-formage, dans laquelle la surface latérale de la préforme se déforme sous l'effet combiné du chauffage et de la dépression, et
- la figure 4 représente l'étape de démoulage du récipient creux décoré.

Le procédé vise à produire un récipient creux en matière plastique, décoré, de forme prédéterminée, comme par exemple un pot de yaourt.

Ce procédé comprend les étapes suivantes :
- production d'une préforme creuse 10 en matière plastique, comprenant une paroi latérale 11 de forme engendrée par le mouvement d'une génératrice droite le long d'un contour fermé convexe et présentant des premier et second bords libres 111 et 112 opposés à contour fermé délimitant des première et seconde faces, un fond 12 fermant la première face de façon étanche, et une ouverture 14 portée par la seconde face,
- décoration du côté de la paroi latérale 11 tourné vers l'extérieur de la préforme creuse 10.

La préforme est produite par une opération de thermoformage, qui consiste à chauffer une feuille de matière thermoplastique, telle que du polystyrène ou du polypropylène, puis à constituer la préforme creuse 10 par emboutissage, éventuellement assisté par pression d'air, ou aspiration sous vide.

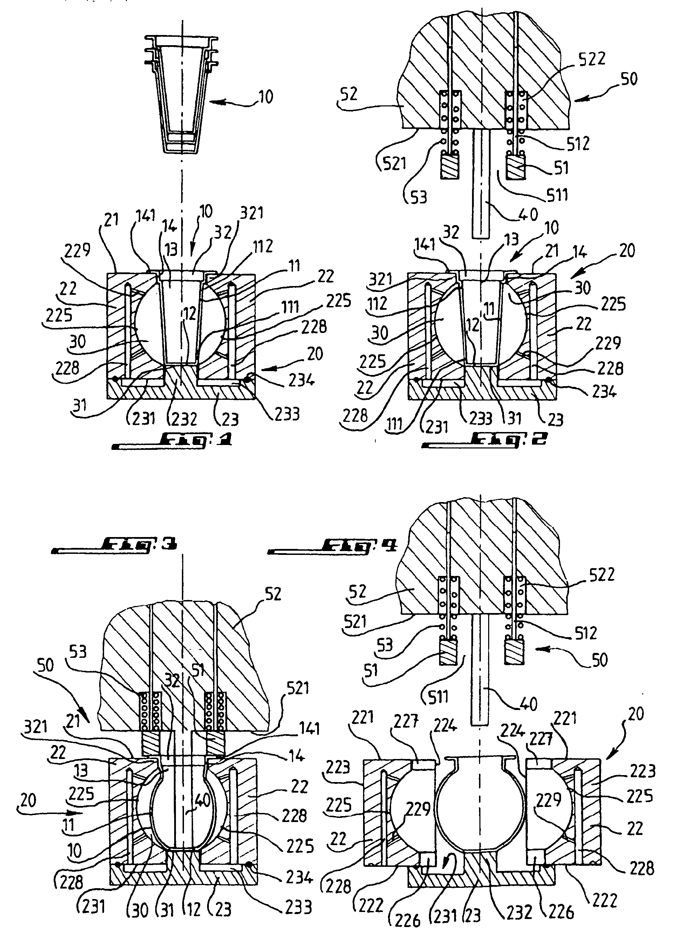

La paroi latérale 11 de la préforme est typiquement tronconique, comme le montre la figure 1, cette forme étant engendrée par une génératrice droite circulant le long d'un cercle.

Cette paroi latérale 11 peut également être un tronc de pyramide aux arêtes arrondies, cette forme étant engendrée par une génératrice droite circulant le long d'un carré aux angles arrondis.

Elle peut encore être engendrée par la circulation d'une génératrice droite le long d'une ellipse de base, la paroi présentant alors des sections elliptiques dans des plans parallèles à celui de l'ellipse de base.

Toutes ces formes permettent de décorer le côté extérieur de la paroi latérale 11 par un procédé offset sec, par sérigraphie ou par tampographie. Ces méthodes sont connues de l'homme du métier et ne seront pas décrites ici.

Le fond 12 est venu de matière avec la paroi latérale 11. L'ouverture 13 occupe généralement toute la seconde face et est donc délimité par le second bord libre 112.

Selon l'invention, le procédé comprend une étape de post-formage de la préforme creuse 10 décorée dans un moule 20 comprenant une cavité interne 30 présentant la dite forme prédéterminée, pour former le récipient creux décoré.

Le procédé comprend enfin une étape de démoulage du récipient creux décoré après post-formage.

A cet effet, le moule 20 comprend un socle 23 fixe et deux demi-coquilles 22 mobiles par rapport au socle 23 sur une face de guidage 231 de celui-ci sensiblement horizontale.

Comme on peut le voir sur la figure 4, les demi-coquilles 22 présentent une forme sensiblement parallélépipédique, et comprennent chacune au moins une face supérieure 221, une face inférieure 222 glissant sur la face de guidage 231 du socle 23, une face extérieure 223 tournée vers l'extérieur du moule, et une face intérieure 224 opposée à la face extérieure 223.

Ces demi-coquilles 22 sont mobiles entre une position assemblée dans laquelle les deux demi-coquilles 22 sont en contact par leurs faces intérieures 224 respectives, et une position écartée dans laquelle ces faces intérieures 224 sont relativement plus éloignées l'une de l'autre que dans la position assemblée. Les positions assemblées et écartées correspondent respectivement aux étapes de post-formage et de démoulage, comme on le verra plus loin.

La cavité interne 30 du moule 20 est délimitée par une surface de base 31 ménagée sur le socle 23, des surfaces internes 225 creusées dans les faces intérieures 224 des demi-coquilles 22 et un orifice 32 situé d'un côté de la cavité interne 30 opposé à la surface de base 31 et débouchant à l'extérieur du moule 20 par une face de chargement 21 de celui-ci.

La face de chargement 21 est constituée par les faces supérieures 221 des deux demi-coquilles 22.

Le socle 23 comprend une partie proéminente 232 faisant saillie par rapport à sa face de guidage 231, la surface de base 31 étant ménagée à une extrémité libre de cette partie proéminente.

Cette surface de base 31 présente une forme correspondante à celle de la première face de la préforme creuse 10.

Des échancrures inférieures 226 sont ménagées dans les faces intérieures 224 des demi-coquilles 22, d'un premier côté de ces faces proche du socle 23, et viennent enserrer la partie proéminente 232 quand les demi-coquilles 22 sont en position assemblée.

Des échancrures supérieures 227 sont également ménagées dans les faces intérieures 224 des demi-coquilles 22, d'un second côté de ces faces opposé au premier, et constituent l'orifice 32 quand les demi-coquilles 22 sont en position assemblée.

Les surfaces internes 225 creusées dans les faces intérieures 224 des demi-coquilles s'étendent à travers ces faces intérieures entre les échancrures supérieure et inférieure 226 et 227.

La surface de base 31 s'inscrit dans la continuité des surfaces internes 225, sans présenter de solution de continuité au passage d'une surface à l'autre.

Des canaux 228 ménagés dans les demi-coquilles 22 débouchent par une première extrémité dans une chambre de mise sous vide 233. Des perçages 229 mettent en communication les canaux 228 et la cavité interne 30. Ces perçages 229 débouchent par des premières extrémités respectives sur les surfaces internes 225 des demi-coquilles, et par des secondes extrémités respectives opposées aux premières dans les canaux 228.

La chambre de mise sous vide 233 est creusée dans la face de guidage 231 du socle 23 et présente un côté supérieur ouvert obturé par les faces inférieures 222 des demi-coquilles 22 quand celles-ci sont dans leur position assemblée. Des joints 234 assurent l'étanchéité entre le socle 23 et les demi-coquilles 22. La chambre de mise sous vide 233 est raccordée à des moyens de mise sous vide non représentés.

La préforme creuse 10, comme on le voit sur les figures 1 et 2, comprend un col 14 se dressant autour de l'ouverture 13 dans une direction opposée au fond 12 de la préforme, et plus précisément, dans le mode de réalisation illustré ici, se dressant à partir du second bord libre 112, légèrement en saillie vers l'extérieur du second bord libre 112.

Ce col 14 et l'orifice 32 du moule sont de formes correspondantes.

Pendant l'opération de post-formage, la préforme creuse 10 est disposée dans la cavité interne 30 du moule 20, son fond 12 reposant sur la surface de base 31 de la cavité et son col 14 étant engagé dans l'orifice 32.

Par ailleurs, le col 14 porte sur un bord opposé à l'ouverture 13, une collerette périphérique 141 s'étendant vers l'extérieur du col 14, dans un plan parallèle à l'ouverture 13.

Quand la préforme est disposée dans la cavité 30, cette collerette 141 repose sur la face de chargement 21 du moule 20, sur un bord périphérique 321 de l'orifice 32.

L'intérieur de la préforme 10 communique donc avec l'extérieur du moule à travers l'orifice 32.

Pendant l'étape de post-formage, la préforme creuse 10 est chauffée de l'intérieur, sans contact avec sa paroi latérale 11.

Ce chauffage est réalisé par circulation d'air chaud ou de vapeur d'eau. L'air ou la vapeur est injecté dans la préforme par une canne d'injection introduite à l'intérieur de celle-ci à travers l'ouverture 13, et réaspiré par une canne d'aspiration.

La préforme creuse 10 peut également être chauffée par un élément chauffant 40 engagé à travers l'ouverture 13 à l'intérieur de la préforme, comme le montre la figure 3, et chauffant par rayonnement infrarouge.

Pendant l'étape de post-formage, une dépression est créée entre la paroi latérale 11 de la préforme creuse 10 et la surface interne 225 des demi-coquilles 22 par les moyens de mise sous vide, qui tirent au vide à travers la chambre de mise sous vide 233, les canaux 228 et les perçages 229.

La paroi latérale 11, chauffée jusqu'à son point de ramollissement, se déforme pour venir se plaquer sur la surface interne 225 des demi-coquilles 22.

Pendant cette opération, des moyens d'étanchéité 50 assurent l'étanchéité entre le col 14 de la préforme 10 et le bord 321 de l'orifice 32 du moule 20. Cette étanchéité est indispensable pour maintenir en dépression l'espace annulaire situé entre la paroi latérale 11 de la préforme et les surfaces internes 225.

Comme on le voit sur les figures 2 à 4, les moyens d'étanchéité 50 comprennent un bâti mobile 52, un cadre 51 lié à une face de pression 521 du bâti 52 et mobile en translation perpendiculairement à la face de pression 521 entre une première position dans laquelle le cadre 51 est plaqué sur la face de pression 521, et une seconde position dans laquelle le cadre 51 n'est pas plaqué sur la face de pression, et des moyens de rappel élastiques 53 du cadre 51 en seconde position.

Le cadre 51 présente une forme correspondante à celle de la collerette 141 entourant le col 14 de la préforme, et comprend un évidement central 511. Ce cadre 51 est lié au bâti 52 par des tiges 512, solidaires du cadre 51 et mobiles dans des orifices du bâti s'étendant perpendiculairement à la face de pression 521.

Les moyens de rappel élastiques 53 sont des ressorts à spirale, enroulés autour des tiges 512, présentant chacun une première extrémité engagée dans un logement 522 ménagé dans la surface de pression 521 du bâti 52, et une deuxième extrémité opposée à la première prenant appui sur le cadre 51. Ces ressorts 53 sollicitent le cadre 51 dans un sens qui l'éloigne du bâti 52, vers sa seconde position.

Le bâti 52 est mobile par rapport au moule 20 et sa face de pression 521 est sensiblements parallèle à la face de chargement 21 du moule 20. Pendant l'étape de post-formage, sa face de pression 521 vient plaquer le cadre 51 sur la collerette périphérique 141 de la préforme 10, écrasant cette collerette 141 sur toute sa longueur entre le cadre 51 et le bord périphérique 321 de l'orifice 32.

Le bâti 52 et les moyens de rappel élastiques 53 pressent le cadre 51 contre le moule 20, la pression exercée permettant de créer l'étanchéité recherchée entre le col 14 et le bord 321 de l'orifice 32.

Pendant l'étape de post-formage, le fond 12 et le col 14 de la préforme creuse 10 sont maintenus rigidement fixés contre le moule 20. Ce maintien permet de bien maîtriser la déformation de la paroi latérale 11, en évitant les perturbations éventuelles causées par la libération des tensions internes de la préforme.

Le fond 12 est maintenu en position contre la surface de base 31 par effet ventouse. Un orifice d'aspiration est ménagé dans la surface de base 31, et relié par un canal non représenté aux moyens de mise sous vide.

Le col 14 de la préforme est maintenu à une position fixe par rapport au moule par sa collerette périphérique 141, engagée entre le cadre 51 et la face de chargement 21 du moule.

L'élément chauffant 40, ou les cannes d'injection et d'aspiration, sont fixées à la face de pression 521 du bâti 52 et s'étendent perpendiculairement à celle-ci à travers l'évidement central 511 du cadre 51.

Quand le bâti 52 vient presser le cadre 51 contre la face de chargement 21 du moule, l'élément chauffant 40 pénètre dans la préforme à travers l'orifice 32.

Le moule 20 et le cadre 51 sont refroidis par circulation d'eau froide dans des tubes non représentés.

L'étape de post-formage de la préforme creuse est réalisée en plusieurs phases, représentées sur les figures 1 à 3.

Dans une première phase, une préforme creuse 10 est introduite dans la cavité interne 30 du moule 10 froid, par l'orifice 32.

Dans une deuxième phase, le cadre 51 est mis en appui sur la collerette 141 de la préforme pour isoler l'espace annulaire situé entre la paroi latérale 11 de la préforme et la surface interne 225 des demi-coquilles 22. Par la même opération l'élément chauffant 40 est introduit dans la préforme creuse 10.

Dans une troisième phase le chauffage s'effectue et une dépression est créée en tirant au vide dans la cavité interne 30 entre la paroi latérale 11 de la préforme et la surface interne 225, la paroi latérale 11 se déformant pour venir se plaquer sur la surface interne 225.

On interrompt alors le chauffage et la mise au vide. Après refroidissement du moule, on procède à l'étape de démoulage, illustrée par la figure 4, en écartant les demi-coquilles 22 pour les faire passer de leur position assemblée à leur position écartée. On peut alors saisir le récipient creux décoré.

Dans une variante de réalisation, la préforme peut être réalisée par injection de thermoplastique dans un moule d'injection. L'étape de décoration peut alors être réalisée conjointement à l'étape d'injection, en disposant une étiquette décorée dans le moule d'injection, selon la technique connue sous la dénomination anglo-saxone In Mold Labeling. L'étiquette est constituée du même matériau que la préforme et vient se souder intimement à la préforme creuse 10 pendant l'injection.

Cette variante est particulièrement avantageuse car les étiquettes utilisées peuvent être décorées par des techniques telles que la flexographie ou l'héliographie, permettant de réaliser des décors de très haute qualité, supérieure à la qualité obtenue avec les procédés d'offset sec, de sérigraphie ou de tampographie.

Il est connu de décorer des récipients creux par manchonnage avec des manchons décorés par flexogravure ou héliogravure, mais le prix de revient de ces récipients creux est alors sensiblement plus élevé que le prix de revient des récipients obtenus avec le procédé de l'invention.

On notera qu'il est possible d'introduire dans le moule des préformes de formes particulières, qui ne peuvent pas passer par l'orifice 32, en écartant les demi-coquilles 22, puis en les rapprochant une fois la préforme mise en place. Cette possibilité augmente encore la flexibilité du procédé.

On conçoit bien que le procédé de l'invention présente des avantages considérables.

Il permet de produire des récipient creux décorés dont les parois latérales sont bombées vers l'extérieur ou l'intérieur. Leur démoulage ne pose pas de problème puisque les demi-coquilles du moule s'écartent.

La surface interne des demi-coquilles peut comprendre des motifs, en creux ou en saillie, à des positions correspondantes à celles des éléments du décor de la préforme.

Les motifs en saillie engendreront des reliefs en creux décorés sur la paroi latérale du récipient. Ces surfaces concaves ne peuvent pas être décorées par des techniques connues comme par exemple par des manchons étirables ou rétractables, ou par impression sans post-formage.

On notera que le chauffage est effectué sans contact, par l'intérieur de la préforme, c'est-à-dire du côté opposé au côté décoré. On évite ainsi les écarts de températures dus aux absorptions différentes du rayonnement en fonction de la couleur du décor.

Dans une variante de réalisation, la préforme est chauffée jusqu'à sa température de ramollissement avant d'être introduite dans la cavité interne du moule. Elle n'est alors pas chauffée pendant l'étape de post-formage, et il n'y a pas besoin de cannes d'injection et d'aspiration ni d'élément chauffant par rayonnement.

On notera que, pour certains récipients creux de formes particulières, le moule peut ne pas comprendre deux demi-coquilles mobiles. Le récipient creux est démoulé après post-formage simplement en l'extrayant de la cavité interne à travers l'orifice 32. Le récipient creux doit dans ce cas présenter une forme qui s'effile vers la surface de base du moule.

La machine de post-formage est indépendante des machines de préformage et d'impression. Elle peut être installée juste en amont des lignes de remplissage des récipients, chez le producteur de yaourt dans le cas de pots de yaourt.

Enfin, on notera qu'il n'est pas indispensable que le fond 12 de la préforme repose sur la surface de base 31 de la cavité. La préforme peut être suspendue par sa collerette, le fond subissant alors une déformation, de la même façon que la paroi latérale.

## Revendications

1. Procédé de production d'un récipient creux décoré de forme prédéterminée, comprenant les étapes suivantes :
- production d'une préforme creuse (10) en matière plastique, comprenant une paroi latérale (11) de forme engendrée par le mouvement d'une génératrice droite le long d'un contour fermé convexe et présentant des premier et second bords libres (111, 112) opposés à contour fermé délimitant des première et seconde faces, un fond (12) fermant la première face de façon étanche, et une ouverture (13) portée par la seconde face,
- décoration d'un côté de la paroi latérale (11) tourné vers l'extérieur de la préforme creuse (10), - une étape de post-formage de la préforme creuse décorée (10) dans un moule (20) comprenant une cavité interne (30) présentant la dite forme prédéterminée, pour former le récipient creux décoré,
- une étape de démoulage du récipient creux décoré, **caractérisé en ce que** le moule (20) comprend deux demi-coquilles (22) présentant des surfaces internes (225) creusées, les demi-coquilles (22) étant mobiles l'une par rapport à l'autre entre une position assemblée dans laquelle leurs surfaces internes (225) délimitent la cavité interne (30) de forme prédéterminée et une position écartée dans laquelle ces surfaces internes (225) sont relativement plus éloignées l'une de l'autre que dans la position assemblée, les positions assemblées et écartées correspondant respectivement aux étapes de post-formage et de démoulage, la cavité interne (30) étant délimitée par une surface de base (31), les surfaces internes (225) des demi-coquilles (22) et un orifice (32) sensiblement opposé à la base (31) débouchant à l'extérieur du moule (20) par une face de chargement (21) de celui-ci, la préforme creuse (10) comprenant un col (14) se dressant autour de l'ouverture (13), la préforme creuse (10) étant disposée dans la cavité interne (30) à l'étape de post-formage de telle sorte que son fond (12) repose sur la surface de base (31) de la cavité (30) et son col (14) soit engagé dans l'orifice (32).

2. Procédé selon la revendication 1, **caractérisé en ce que**, pendant l'étape de post-formage, la préforme creuse (10) est chauffée de l'intérieur, sans contact avec la paroi latérale (11).

3. Procédé selon la revendication 2, **caractérisé en ce que** la préforme creuse (10) est chauffée par circulation d'air chaud ou de vapeur d'eau.

4. Procédé selon la revendication 2, **caractérisé en ce que** la préforme creuse (10) est chauffée par un élément chauffant par rayonnement (40) engagé à travers l'ouverture (13) à l'intérieur de la préforme.

5. Procédé selon l'une quelconque des revendications 1 à 4, **caractérisé en ce que**, pendant l'étape de post-formage, une différence de pression est créée entre l'intérieur de la préforme (10) et l'espace délimité par la paroi latérale (11) de la préforme creuse (10) et la surface interne (225) des demi-coquilles (22), la paroi latérale (11) se déformant pour venir se plaquer sur la surface interne (225).

6. Procédé selon la revendication 5, **caractérisé en ce que** la différence de pression est créée en tirant au vide entre la paroi latérale (11) de la préforme creuse (10) et la surface interne (225) des demi-coquilles (22).

7. Procédé selon l'une quelconque des revendications 1 à 6, **caractérisé en ce que**, pendant l'étape de post-formage, le fond (12) et le col (14) de la préforme creuse (10) sont maintenus rigidement fixés contre le moule (20).

8. Procédé selon l'une quelconque des revendications 1 à 7, **caractérisé en ce que**, pendant l'étape de post-formage, des moyens d'étanchéité (50) assurent l'étanchéité entre le col (14) de la préforme et un bord (321) de l'orifice (32) de la cavité interne (30).

9. Procédé selon la revendication 8, **caractérisé en ce que** le col (14) de la préforme creuse (10) porte sur un bord opposé à l'ouverture (13) une collerette périphérique (141), les moyens d'étanchéité (50) comprenant un cadre (51) plaquant la collerette (141) sur la face de chargement (21) du moule (20), et des moyens de mise en pression du cadre (51) contre le moule (20).

## Patentansprüche

1. Verfahren zur Herstellung eines hohlen dekorierten Behälters in bestimmter Form, umfassend die folgenden Schritte:
- Herstellung einer hohlen Vorform (10) aus Kunststoffmaterial, umfassend eine Seitenwand (11) in einer Form, die durch die Bewegung einer geraden Mantellinie entlang der geschlossenen konvexen Kontur gebildet ist und erste und zweite freie Ränder (111, 112) aufweist, die in geschlossener Kontur gegebenüberliegend sind, die erste und zweite Seiten begrenzen, einen Boden (12), der die erste Seite dicht abschließt und eine Öffnung (13) in der zweiten Seite,
- Dekoration einer Seite der Seitenwand (11), die von der hohlen Vorform (10) nach außen gewandt ist,
- einen Schritt der Nachformung der dekorierten hohlen Vorform (10) in einer Form (20), die einen inneren Hohlraum (30) aufweist, der die genannte bestimmte Form aufweist, zum Ausbilden des hohlen dekorierten Behälters,
- einen Schritt zur Entformung des hohlen dekorierten Behälters, **dadurch gekennzeichnet, dass** die Form (20) zwei Halbschalen (22) umfasst, die hohle Innenflächen (225) aufweisen, wobei die Halbschalen (22) zueinander beweglich sind zwischen einer zusammengesetzten Position, in der ihre Innenflächen (225) den inneren Hohlraum (30) in bestimmter Form begrenzen und einer getrennten Position, in der die Innenflächen (225) relativ weiter voneinander entfernt sind als in der zusammengesetzten Position, wobei die zusammengesetzte und die getrennte Position jeweils den Schritten der Nachformung und der Entformung entsprechen, wobei der innere Hohlraum (30) begrenzt ist durch eine Basisfläche (31), die Innenflächen (225) der Halbschalen (22) und ein Abzug (32) im Wesentlichen gegenüberliegend zur Basis (31) zur Außenseite der Form (20) mit einer Füllseite (21) mündet, wobei die hohle Vorform (10) einen Hals (14) umfasst, der sich um die Öffnung (13) erhebt, wobei die hohle Vorform (10) im inneren Hohlraum (30) im Schritt der Nachformung derart angeordnet ist, dass ihr Boden (12) auf der Basisfläche (31) des Hohlraums (30) ruht und ihr Hals (14) im Abzug (32) eingreift.

2. Verfahren nach Anspruch 1, **dadurch gekennzeichnet, dass** im Schritt der Nachformung, die hohle Vorform (10) von innen erwärmt wird, ohne Kontakt mit der Seitenwand (11).

3. Verfahren nach Anspruch 2, **dadurch gekennzeichnet, dass** die hohle Vorform (10) durch Umwälzen von Heißluft oder Wasserdampf erwärmt wird.

4. Verfahren nach Anspruch 2, **dadurch gekennzeichnet, dass** die hohle Vorform (10) durch ein Strahlungsheizelement (40) erwärmt wird, das durch die Öffnung (13) ins Innere der Vorform eingeführt wird.

5. Verfahren nach einem der Ansprüche 1 bis 4, **dadurch gekennzeichnet, dass** während des Schritts der Nachformung, eine Druckdifferenz ausgebildet wird zwischen dem Inneren der Vorform (10) und dem durch die Seitenwand (11) der hohlen Vorform (10) und die Innenfläche (225) der Halbschalen (22) begrenzten Raum, wobei sich die Seitenwand (11) verformt, so dass sie sich auf der Innenfläche (225) anlegt.

6. Verfahren nach Anspruch 5, **dadurch gekennzeichnet, dass** die Druckdifferenz durch Ziehen eines Vakuums zwischen der Seitenwand (11) der hohlen Vorform (10) und der Innenfläche (225) der Halbschalen (22) ausgebildet wird.

7. Verfahren nach einem der Ansprüche 1 bis 6, **dadurch gekennzeichnet, dass** während des Schritts der Nachformung, der Boden (12) und der Hals (14) der hohlen Vorform (10) gegen die Form (20) starr fixiert gehalten werden.

8. Verfahren nach einem der Ansprüche 1 bis 7, **dadurch gekennzeichnet, dass** während des Schritts der Nachformung, Dichtungsmittel (50) die Dichtigkeit zwischen dem Hals (14) der Vorform und einem Rand (321) des Abzugs (32) des inneren Hohlraums (30) gewährleisten.

9. Verfahren nach Anspruch 8, **dadurch gekennzeichnet, dass** der Hals (14) der hohlen Vorform (10) auf einem Rand gegenüberliegend zur Öffnung (13) einen umlaufenden Ring (141) trägt; wobei die Dichtungsmittel (50) einen Rahmen (51) umfassen, der den Ring (141) auf die Füllseite (71) der Form (20) anlegen, und Druckmittel zum Drücken des Rahmens (51) gegen die Form (20).

## Claims

1. Process for producing a decorated hollow container of predetermined shape, comprising the following steps:
- production of a hollow preform (10) of plastic material, comprising a side wall (11) with a shape produced by the movement of a straight generatrix along a convex closed contour and having opposite free first and second edges (111, 112) with a closed contour delimiting first and second faces, a bottom (12) closing the first face in a sealed manner, and an opening (13) borne by the second face,
- decoration of an outward-facing side of the side wall (11) of the hollow preform (10),
- a step for postforming the decorated hollow preform (10) in a mould (20) comprising an inner cavity (30) have the said predetermined shape, for forming the decorated hollow container,
- a step for demoulding the decorated hollow container, **characterised in that** the mould (20) comprises two half-shells (22) having hollowed inner surfaces (225), the two half-shells (22) being movable relative to one another between an assembled position in which their inner surfaces (225) delimit the inner cavity (30) of predetermined shape and a separated position in which these inner surfaces (225) are relatively farther away from one another than in the assembled position, the assembled and separated positions corresponding respectively to the postforming and demoulding steps, the inner cavity (30) being delimited by a base surface (31), the inner surfaces (225) of the half-shells (22) and an orifice (32) substantially opposite the base (31) and opening onto the outside of the mould (20) via a loading face (21) thereof, the hollow preform (10) comprising a neck (14) rising around the opening (13), the hollow preform (10) being arranged in the inner cavity (30) at the postforming step such that its bottom (12) rests on the base surface (31) of the cavity (30) and its neck (14) is engaged in the orifice (32).

2. Process according to Claim 1, **characterised in that**, during the postforming step, the hollow preform (10) is heated from inside, without contact with the side wall (11).

3. Process according to Claim 2, **characterised in that** the hollow preform (10) is heated by circulation of hot air or steam.

4. Process according to Claim 2, **characterised in that** the hollow preform (10) is heated by a radiant heating element (40) inserted through the opening (13) into the interior of the preform.

5. Process according to any one of Claims 1 to 4, **characterised in that**, during the postforming step, a pressure difference is created between the interior of the preform (10) and the space delimited by the side wall (11) of the hollow preform (10) and the inner surface (225) of the half-shells (22), the side wall (11) being deformed so as to be laid against the inner surface (225).

6. Process according to Claim 5, **characterised in that** the pressure difference is created by applying a vacuum between the side wall (11) of the hollow preform (10) and the inner surface (225) of the half-shells (22).

7. Process according to any one of Claims 1 to 6, **characterised in that**, during the postforming step, the bottom (12) and the neck (14) of the hollow preform (10) are kept rigidly fixed against the mould (20).

8. Process according to any one of Claims 1 to 7, **characterised in that**, during the postforming step, sealing means (50) ensure the sealing between the neck (14) of the preform and an edge (321) of the orifice (32) of the inner cavity (30).

9. Process according to Claim 8, **characterised in that** the neck (14) of the hollow preform (10) bears a peripheral collar (141) on an edge opposite the opening (13), the sealing means (50) comprising a frame (51) laying the collar (141) against the loading face (21) of the mould (20), and means for pressing the frame (51) against the mould (20).
